Europäisches Patentamt

European Patent Office

Office européen des brevets

(19)

(11) **EP 0 812 415 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(21) Anmeldenummer: **96944048.6**

(22) Anmeldetag: **20.12.1996**

(51) Int Cl.$^7$: **G01N 21/27**

(86) Internationale Anmeldenummer:
**PCT/EP96/05779**

(87) Internationale Veröffentlichungsnummer:
**WO 97/024605 (10.07.1997 Gazette 1997/30)**

(54) **VERFAHREN ZUR HERSTELLUNG DER VERGLEICHBARKEIT VON SPEKTROMETERMESSUNGEN**

METHOD FOR PRODUCING COMPARABILITY OF SPECTROMETER MEASUREMENTS

PROCEDE PERMETTANT DE PARVENIR A UNE COMPARABILITE DE MESURES DE SPECTROMETRES

(84) Benannte Vertragsstaaten:
**CH DE ES FR GB IT LI NL**

(30) Priorität: **27.12.1995 DE 19548378**

(43) Veröffentlichungstag der Anmeldung:
**17.12.1997 Patentblatt 1997/51**

(73) Patentinhaber: **BRAN + LUEBBE GmbH**
**22844 Norderstedt (DE)**

(72) Erfinder: **METHFESSEL, Jennifer**
**D-15230 Frankfurt an der Oder (DE)**

(74) Vertreter: **Lang, Friedrich, Dipl.-Ing. et al**
**Patentanwälte Lang & Tomerius**
**Postfach 15 13 24**
**80048 München (DE)**

(56) Entgegenhaltungen:
**EP-A- 0 345 773          WO-A-85/01348**
**DE-A- 2 509 091          DE-A- 3 908 831**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung der Vergleichbarkeit von Spektrometermessungen, vorzugsweise des nahen Infrarotbereichs, mit mehreren Meßgeräteindividuen gleicher Art.

NIR-Spektrometer haben einen weiten Anwendungsbereich gefunden. Sie dienen zur Analyse von gasförmigen und festen Stoffen. Mit den ständig steigenden Anforderungen an die Genauigkeit erlangt eine exakte Kalibrierung dieser Geräte besondere Bedeutung.

Dabei ist es besonders wichtig, daß die mit einem Spektrometer erhaltenen Meßwerte einer Probe auf einem anderen Spektrometer der gleichen Art reproduzierbar sind.

Weiterhin wird die Genauigkeit der Spektralmessungen durch Veränderungen an der Meßprobe selbst, z.B. bezügliche ihrer Konsistenz oder Abmessungen bei inhomogenen Materialien beeinträchtigt. Ein Normierungsverfahren zur Verringerung von Korngrößeneffekten ist beispielsweise ist US-PS 5,132,538 beschrieben.

Es ist allgemein bekannt natürliche (absolute) Standards zu benutzen, um die Meßinstrumente zu standardisieren, hierzu gehört z.B. die Benutzung eines spektralen Absorptionsbandes eines Gases, um die Wellenlängenskalierung eines Spektrometers zu kalibrieren. Im Bereich der Infrarot- und nahen Infrarot-Spektroskopie ist die Standardisierung des Wellenlängenmaßstabs auf diese Art Stand der Technik. Der Maßstab für die Intensität ist andererseits aber nicht standardisiert. Proben werden relativ zu einer "hundert%"-Standard-Probe oder Referenz gemessen. Bei Messungen der Reflexion bedeutet dies üblicherweise einen "hundert%"-Reflektor. Bei Messungen der Durchsicht (Transmission) bedeutet dies üblicherweise die Signalgröße, bei der sich keine Probe im Lichtstrahl befindet. Zusätzlich kann das "Nullsignal" dadurch gemessen werden, indem physikalisch der Lichtstrahl am Erreichen des Detektors gehindert wird. Das Signal der Probe kann dann mittels des gemessenen offsetsignals korrigiert werden.

Von dem bereits mit dem gemessenen Offsetsignal korrigierten Signalen $S_s$ und $S_r$ wird angenommen, daß $S_s/S_r$ direkt proportional zu $I_s/I_r$ ist, worin

$S_s$ das Signal bei Messung der Probe bedeutet,

$S_r$ das Signal bei Messung der Referenz,

$I_s$ das wahre Signal der Intensität des Lichts, das von der Probe reflektiert oder durch die Probe hindurchgelassen (transmittiert) wird,

$I_r$ das wahre Signal der Intensität des Lichtes, das von der Referenz reflektiert oder transmittiert wird.

Tatsächlich trägt die Konstruktion von Spektrometern besonders diesem Umstand dadurch Rechnung, daß die Detektoren so ausgelegt werden, daß sie im linearen Bereich ihrer Kennlinie betrieben werden.

Der Anwender hat dabei, soweit wie mögliche sicher zu stellen, daß $I_s$ und $I_r$ unter denselben Randbedingungen gemessen werden. Es gibt jedoch viele Fälle, in denen Spektrometer nach dem heutigen Stand der Technik, die in der oben beschriebenen Weise betrieben werden, bei der Messung eines in sich stimmigen Signals der Reflexion oder Transmission einer vorgegebenen Probe versagen. Die Unterschiede der spektralen Empfindlichkeit (auf der Skala der Intensität) zwischen individuellen Spektrometern kann sehr groß sein, sogar bei denjenigen derselben Art. In einigen Fällen ist die Empfindlichkeit von Spektrometern direkt proportional zu $I_s/I_r$, aber es unterscheiden sich die Linearitätskoeffizienten der Instrumente untereinander. In anderen Fällen ist $S_s/S_r$ in einer komplexeren Weise mit $I_s/I_r$, verknüpft, nämlich nicht-linear.

Die Gründe, daß die Linearitätskoeffizienten zwischen den Instrumenten variieren, könnten Unterschiede in der Reflexion der Referenzprobe, Unterschiede in der optischen Einstellung, mechanische Toleranzen der Probenhalter usw. sein.

Der Grund für die nichtlineare Beziehung zwischen $S_s/S_r$ und $I_s/I_r$ kann eine nichtlineare Detektorkennlinie oder Streulicht sein, das von der Reflexion (Transmission) der Probe abhängig ist. Ein weiterer Grund für die Nichtlinearität können mehrfache Reflexionen an optischen Grenzschichten infolge großer Unterschiede des Brechnungsindexes sein. Die nichtlinearen Effekte treten besonders deutlich an der Kontaktstelle mit der Probe auf und werden noch weiter verstärkt, wenn Safir (Brechungsindex n=1,75) anstatt beispielsweise Quarz (n=1,45) als Fenstermaterial benutzt wird. In vielen Anwendungsfällen sind jedoch safirfenster, zum Beispiel wegen ihrer überlegenen Stärke und Widerstandsfähigkeit, notwendig.

So wird in der Druckschrift EP 0345773 A2 ein Mikroskop-Spektralgerät offenbart, mit dem Soll-Spektren B($\lambda$) gesicherter Referenzproben in einem Spektrometerindividuum gespeichert werden und Vergleichsspektren B'($\lambda$) der gesicherten Referenzproben ermittelt werden können. Das Spektrum S'($\lambda$) einer unbekannten Probe kann gemessen und das ist-Spektrum S($\lambda$) der unbekannten Probe nach der Beziehung S($\lambda$)=(B($\lambda$)/B'($\lambda$))*S'($\lambda$) ermittelt werden.

Der Erfindung liegt deshalb die Aufgabe zugrunde, die bei einer Anzahl von spektralmessungen gleicher Art erzielbare Genauigkeit und Reproduzierbarkeit gegenüber dem Stand der Technik weiter zu verbessern.

Gelöst wird diese Aufgabe durch ein Verfahren der eingangs genannten Art, gemäß dem unabhängigen Verfahrensanspruch 1.

Das Verfahren verknüpft also Geräte und einen Satz gesicherter Referenzproben für die Bewertung von Messungen und die Berechnung von Parametern für die Korrektur. Ein Vorteil dieses Verfahrens besteht darin, daß es unabhängig von einem bestimmten Muttergerät ist, da es auf absoluten diffusen Reflexions- oder Absorptionsgraden, die von einem Standard abgeleitet werden, basiert. Das Muttersystem kann jederzeit ersetzt oder dupliziert werden.

Das Verfahren ist ferner für alle Arten von spektroskopischen Messungen, d.h. Transmissions-, Reflexions- oder Absorptionsmessungen geeignet, wenn die Referenzproben in geeigneter Weise definiert werden. Die Referenzproben müssen den relevanten Meßbereich abdecken und stabile physikalische Eigenschaften aufweisen.

Bei einer vorteilhaften Ausführungsform des Verfahrens sind acht Standardproben, z.B. mit diffusen Reflexionsgeraden von 2%, 10%, 20%, 40%, 50%, 60%, 80% und 99% vorgesehen.

Einflüsse gerätetechnischer Art können gemäß Anspruch 1 dadurch ausgeschlossen werden, daß die Näherungsfunktion mindestens zweiter oder höherer Ordnung ist.

Die Maßnahme, daß die Güte der Näherungsfunktion durch Berechnung der Standardabweichung oder des Korrelationskoeffizienten an jedem Wellenlängenstützpunkt bestimmt wird, ermöglicht gemäß Anspruch 2 oder 3 jederzeit eine Überprüfung der Meßergebnisse auf ihre Verläßlichkeit.

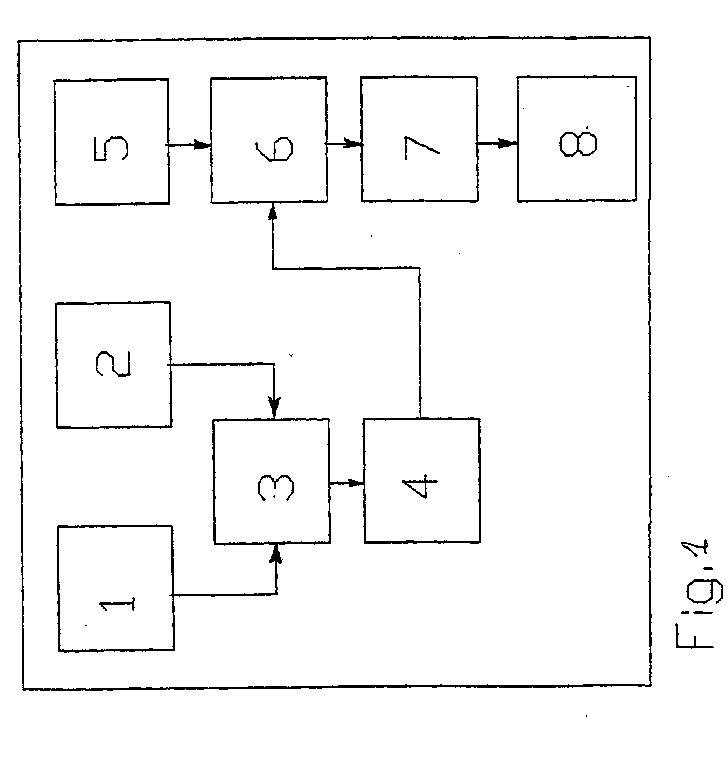

Weitere Einzelheiten, Merkmale und Vorteile der Erfindung ergeben sich aus der nachfolgenden Beschreibung anhand der Zeichnung. Die einzige Figur zeigt ein Blockschaltbild zur Durchführung des Verfahrens.

Die Figur zeigt ein Blockschaltbild zur Durchführung des Verfahrens, bei dem als Näherungsfunktion eine quadratische Funktion vorgesehen ist, die eine nicht-lineare Abhängigkeit unterstellt.

Das im folgenden beschriebene Verfahren zur Standardisierung wurde für Messungen mit diffuser Reflexion entwickelt, die ein Nah-Infrarot-Spektrometer verwenden mit einen faseroptischen Sensor. Das Schutzfenster in der Spitze eines faseroptischen Sensors besteht aus Korund. Während der Messung ist das Fenster in Kontakt mit der Probe oder sehr nahe an der Probe (Abstand ca. 0,1 mm). In diesem Fall kann die Abhängigkeit zwischen $S_s/S_r$ und $I_s/I_r$ gut durch eine quadratische Gleichungen beschrieben werden, da mehrfache Reflexionen an der Grenzfläche zwischen Korund und Reflektor zu einen merkbaren quadratischen Anteil beitragen.

Zur Durchführung des Verfahrens werden zunächst 8 gesicherte Referenzproben mit diffuser Reflexion von 2%, 10%, 20%, 40%, 50%, 60%, 80% und 99% auf dem Spektrometer gemessen. Dies ergibt acht Spektren diffuser Reflexion in Abhängigkeit der Wellenlänge (ca. 450 Datenpunkte).Die Messung der acht gesicherten Referenzproben wird 3 mal wiederholt. Vor jeder neuen Messreihe wird die Referenz erneut gemessen.

Die drei Spektren der diffusen Reflexion werden für jeden Wert gemittelt und geglättet, wobei ein Savitsky-Golay Algorithmus verwendet wird. Diese gemittelten und geglätteten Spektren sind die "gemessen"-Werte der Referenzproben.

Die acht Referenzproben sind zuvor auf einem Kalibrierten Referenzgerät gemessen worden. Die Messungen auf diesem Gerät stellen acht Spektren diffuser Reflexion über die Wellenlänge zur Verfügung. Dies sind die "wahren"-Werte.

An jeder Wellenlänge (i) gibt es acht "gemessene"-Werte und acht "wahre"-Werte. Für ein ideales Spektrometer würden die "wahren"-Werte mit den "gemessenen"-Werten identisch sein. Aber infolge einer Anzahl von Einflüssen, die oben genannt wurden, ist dies nicht der Fall. In dem hier betrachten Fall kann die Beziehung zwischen den "gemessenen"-Werten und den "wahren"-Werten zutreffend durch die quadratische Funktion beschrieben werden:

$$(1) \qquad Y(i) = A \bullet X(i)^2 + B \bullet X(i) + C$$

Darin ist A der quadratische Koeffizient, B der lineare Koeffizient und C die konstante Nullpunktabweichung(Offset). Die Koeffizienten sind die Parameter der Näherungsfunktion. Y wird als Funktion von X angegeben ,da von Y bzw. von den "gemessenen"-Werten angenommen wird, daß sie einen größeren experimentellen Fehler aufweisen.

Die Software berechnet die Koeffizienten für die beste quadratische Näherung zwischen den "gemessenen"-Werten und den "wahren"-Werten ,indem die Methode der geringsten quadratischen Abweichung angewandt wird.

Sobald die Parameter der Naherungsfunktion, also A, B und C bekannt sind, kann die Gleichung 1 dazu benutzt werden, um die X(i)-Werte in Abhängigkeit von den Y(i)-Werten zu berechnen. Dies sind die "korrigierten gemessen" Werte, da sie in der Weise angepaßt wurden, daß sie den Einfluß der spektralen Charakteristik des Spektrometers berücksichtigen. Die Gleichung 1 wird in die Form umgestellt:

$$(2) \qquad X(i)^2 + p \bullet X(i) + q = 0$$

worin
p - B/A und q = [C - Y(i)]/A ist.

Durch Ziehen der Wurzel aus Gleichung (2) erhält man:

$$(3) \qquad X_1(i) = -p/2 + \sqrt{[(p/2)^2 - q]}$$

und

$$(4) \qquad X_2(i) = -p/2 - \sqrt{[(p/2)^2 - q]}$$

Die Wurzel, die für das vorliegende Problem von Intresse ist, ist diejenige, die am nächsten an dem zu erwartenden Ist-Wert liegt. Wenn ein Korundfenster benutzt wird, ist dies gewöhnlich die Wurzel, die in Gleichungen (3) angegeben ist. Es können jedoch Fälle auftreten, z.B. daß die Faseroptik ohne Fenster verwendet wird, wodurch die in Gleichungen (4) angegebene Wurzel die zutreffende ist. Deshalb werden beide Wurzelausdrücke berechnet. Typischerweise liegt der Wert einer Wurzeln zwischen 0 und 1, während der Wert der anderen Wurzeln um einen Faktor 10 höher ist.

Die Güte der quadratischen Näherung wird dadurch überprüft, indem für jede Wellenlänge die "wahren" Werte über den "korrigierten gemessen" Werten aufgetragen werden und eine lineare Regression durchgeführt wird. Eine perfekten Näherung würde einen Korrelationskoeffizienten mit dem Wert 1 ergeben.

Eine andere Methode, um die Güte der quadratischen Näherung zu ermitteln, ist die Berechnung der Standardabweichung des Fehlers der Reflektion (SER) bei jeder Wellenlänge, die als die Standardabweichung des Restfehlers zwischen den "wahren" Werten und den "korrigierten gemessenen" Werten definiert ist.

Die Software berechnet den Korrelationskoeffizienten und die Standardabweichung der Reflexion bei jeder Wellenlänge. Die Güte der quadratischen Näherung wird nur im normalen Betriebsbereich des Spektrometers ermittelt. Für die Standardisierung wird die quadratische Näherung als ausreichend gut angesehen, wenn das Mittel des Korrelationskoeffizienten über alle Wellenlängen größer oder gleich 0,9995 und der kleinste Korrelationskoeffizienten größer gleich 0,9990 ist. In ähnlicher Weise soll der SER kleiner oder gleich 0,001 Referenz-Einheiten betragen. Diese Grenzen wurden experimentell durch Versuche ermittelt, indem eine Anzahl von verschiedenen Spektrometern der gleichen Art und eine Anzahl von standardisierten Sätzen von Referenzproben verwendet wurden. Die Grenzen geben so das in diesem Fall erwünschte Maß der Standardisierung wieder.

Sobald diese Bedingungen erfüllt sind, wird die Software zur Herstellung der Übertragbarkeit gestartet. Alle folgenden Messungen werden automatisch korrigiert, indem die Gleichungen drei oder vier herangezogen werden, um die "wahren"-Werte anzugeben. Die Messungen, die auf dem Spektrometer durchgeführt werden, entsprechen nun den Messungen, die auf dem Referenzgerät erhaltene werden, mit einem verbliebenen Fehler, der der Genauigkeit der Näherung entspricht oder infolge von Rauschanteilen usw.. Dasselbe Verfahren kann wiederholt auf jede beliebigen Anzahl von spektrometern angewandt werden, sodaß eine Population von standardisierten Spektrometern erreicht wird.

Im folgenden wird die Bedeutung des Referenzgerätes und des Satzes von gesicherten Referenzproben beschrieben.Das Referenzgerät wird durch die Benutzung eines Satzes von gesicherten Referenzproben erzeugt. Dieser Satz von gesicherten Referenzproben besteht aus acht diffus reflektierenden zielen, die den Bereich zwischen 2% bis 99% überstreichen und die auf einem Spektrometer kalibriert worden sind, das seinerseits mit Proben kalibriert wurde, die durch das nationale Eichamt, zB. durch das National Bureau of Standards in den U.S.A., certifiziert sind. Die Werte der diffusen Reflexion, die gemessen werden, sind deshalb absolute Eigenschaften des Materials. Diese Werte repräsentieren die "wahren"-Werte des Satzes der gesicherten Referenzproben.

Die diffus reflektierenden Referenzproben werden dann in den individuellen Haltern befestigt, sodaß sie in reproduzierbarer Weise dem Referenzgerät zur Verfügung stehen. Dies ist der Satz gesicherter Referenzproben.

Der Satz gesicherter Referenzproben wird nun, wie oben beschrieben, auf dem Referenzgerät vermessen. Wie zuvor werden die quadratischen und linearen Koeffizienten und der Offset der quadratischen Näherungen bei jeder Wellenlänge errechnet. Der Korrelationskoeffizient und der Standardfehler der Reflektion werden wiederum benötigt, um die Güte der Näherung zu ermitteln und um den verbliebene Fehler in der Betriebswellenlängenbereich des Spektrometers zu bestimmen. Dieselben Kriterien werden für die Entscheidung herangezogen, ob die quadratische Näherung gut genug ist, um sie für die Standardisierung zu nutzen.

Nach Abschluß des Verfahrens zur Herstellung der Übertragbarkeit, entsprechen die Meßwerte, die auf dem Referenzgerät durchgeführt wurden, denjenigen, die durch das nationale Eichamt ermittelt wurden, innerhalb der Grenzen des verbliebenen Rest-fehlers, der auf plus/minus 0,01 Referenzeinheiten (Standardabweichung) geschätzt wird.

Damit ist die Vergleichbarkeit zu Standards und Messungen des nationalen Eichamtes erreicht.

Sobald das Referenzgerät auf diese Weise einmal standardisiert wurde, kann es dazu benutzt werden, um direkt die "wahren "-Werte für weitere Sätze von Referenzproben zu ermitteln.

Der Vorteil dieser Methode liegt darin, daß sie von einem festen Satz Referenzproben oder einem Referenzgerät unabhängig ist, weil sich das Verfahren auf der absoluten diffusen Reflexion abstützt, die durch das nationale Eichamt certifiziert ist. Sowohl das Referenzgerät als auch der Satz der Referenzproben kann jederzeit ersetzt oder zu jederzeit vervielfältigt werden.

Die Herstellung der Übertragbarkeit ist ein Verfahren, das es erlaubt, verschiedene Spektrometer derselben Art zu standardisieren, indem, wie oben beschrieben, die absolute Eigenschaft eines speziellen standardisierten Materials und geeignete Rechenverfahren genutzt werden.

Dasselbe Verfahren zur Standardisierung kann auf jede Art spektroskopischer Messungen angewandt werden, z.B. Reflektion, Transmission oder Transflexion, vorausgesetzt daß ein Satz geeigneter Referenzproben definiert werden kann. Der Satz Referenzproben muß den relevanten Messbereich überspannen und eine unabänderliche physikalische Eigenschaft verkörpern. Diese physikalische Eigenschaft muß durch einen unabhängigen Körper quantifizierbar sein.

Die Beziehung zwischen den "gemessenen"-Werten und den "wahren"-Werten wird zwischen unterschiedlichen Konstruktionen von Spektrometern differieren. Deshalb kann es angebracht sein, die hier beschriebenen quadratische Gleichungen durch Gleichungen höherer Ordnung zu ersetzen. Falls die Gleichungen nicht analytisch lösbar sind, können andere numerische Methoden benutzt werden. Die Anzahl der benutzten Referenzproben kann an die Komplexität der Beziehung und an die erforderliche Genauigkeit angepaßt werden.

Bezugszeichenliste

1    Speicherung der Sollspektren

2    Speicherung der Vergleichsspektren

3    Berechnung der Näherungsfunktion

4    Speicherung der Näherungsfunktion

5    Speicherung des Spektrums einer unbehannten Probe

6    Berechnung des Ist-Spektrums

7    Speicherung des Ist-Spektrums

8    Ausgabe des Ist-Spektrums

**Patentansprüche**

**1.** Verfahren zur Herstellung der Vergleichbarkeit von Spektrometermessungen, vorzugsweise des nahen Infrarotbereichs, insbesondere für Messungen mit diffuser Reflexion, mit mehreren Messgeräteindividuen gleicher Art, wobei das Verfahren die Verfahrensschritte umfasst:

(a) Speicherung (1) von in einem kalibrierten Referenzspektrometer gemessenen Soll-Spektren eines Satzes gesicherter Referenzproben in einem Speicher eines Messgeräteindividuums einer Art an Spektrometern, für die die Vergleichbarkeit der Spektrometermessungen hergestellt werden soll;
(b) Messung des Satzes gesicherter Referenzproben mit dem Messgeräteindividuum aus Verfahrensschritt (a), wobei mindestens 3 Spektren einer jeden Referenzprobe zu einem Vergleichsspektrum vorzugsweise gemittelt werden, und Speicherung (2) der Vergleichsspektren des Satzes gesicherter Referenzproben;
(c) Messung des Spektrums einer unbekannten Probe mit dem Messgeräteindividuum aus Verfahrensschritt (a) und Speicherung (5) dieses Spektrums;
(d) Berechnung (6) eines Ist-Spektrums aus dem Spektrum der unbekannten Probe mit einer Software durch eine Recheneinheit unter Anwendung einer Gleichung, die sich aus einer Näherungsfunktion ergibt;
(e) Speicherung (7) des ist-Spektrums;
(f) Ausgabe (8) des Ist-Spektrums;

**dadurch gekennzeichnet, dass** das Verfahren zur Herstellung der Vergleichbarkeit von Spektrometermessungen nach Verfahrensschritt (b) und vor Verfahrensschritt (c) weiter folgende Verfahrensschritte umfasst:

(i) Berechnung (3) der Koeffizienten einer Näherungsfunktionen mindestens zweiter oder höherer Ordnung für jede Referenzprobe des Satzes gesicherter Referenzproben durch eine Recheneinheit, die Zugriff auf die gespeicherten Soll-Spektren und die gespeicherten Vergleichsspektren des Satzes an gesicherten Referenzproben hat.
(ii) Speicherung (4) der Koeffizienten der Näherungsfunktionen für jede Referenzprobe des Satzes gesicherter Referenzproben in einem Speicher auf den die Recheneinheit zur Berechnung des ist-Spektrums Zugriff hat;

**2.** Verfahren zur Herstellung der Vergleichbarkeit von Spektrometermessungen, nach Anspruch 1, **dadurch gekennzeichnet,**
**dass** die Bestimmung der Güte der Näherungsfunktion für das Vergleichsspektrum einer jeden Referenzprobe des Satzes gesicherter Referenzproben durch Berechnung der Standardabweichung oder des Korrelationskoeffizientens erfolgt.

**3.** Verfahren zur Herstellung der Vergleichbarkeit von Spektrometermessungen, nach Anspruch 1 oder 2, **dadurch gekennzeichnet,**
**dass** die Bestimmung der Güte der Näherungsfunktion für das Spektrum der unbekannten Probe durch Berechnung der Standardabweichung oder des Korrelationskoeffizientens erfolgt.

**4.** Verfahren zur Herstellung der Vergleichbarkeit von Spektrometermessungen, nach einem der vorangegangenen Ansprüche, **dadurch gekennzeich-**

**net,**

**dass** für den Satz an gesicherten Referenzproben Proben mit diffusen Reflexionsgraden von 2 %, 10 %, 20 %, 40 %, 50 %, 60 %, 80 % und 99 % verwendet werden.

## Claims

1. A method for establishing the comparability of spectrometer measurements, preferably of the near infrared range, in particular for measurements with diffuse reflection, with several individual measurement devices of the same kind, where the method includes the process steps:

   (a) Storage (1) of reference spectra of a set of reliable reference samples measured in a calibrated reference spectrometer in the memory of an individual measurement device of the type of spectrometer for which the comparability of the spectrometer measurements is to be established;

   (b) Measurement of the set of reliable references samples with the individual measurement device from method step (a), where at least 3 spectra of any one reference sample are preferably averaged to a comparison sample, and storage (2) of the comparison spectra of the set of the reliable reference samples;

   (c) Measurement of the spectrum of an unknown sample with the individual measurement device from process step (a) and storage (5) of this spectrum;

   (d) Computer calculation (6) of an actual sample from the spectrum of the unknown sample with software using an equation that, from an approximate function, gives;

   (e) Storage (7) of the actual spectrum;

   (f) Output (8) of the actual spectrum;

   which is **characterized by** the fact that the method for establishing the comparability of spectrometer measurements after process step (b) and before process step (c) additionally includes the following process steps:

   (i) Calculation (3) of the coefficients of an approximation function of at least second or higher order for each reference sample of the set of reliable reference samples by a computer that has access to the stored reference spectra and the stored comparison spectra of the set of reliable reference samples.

   (ii) Storage (4) of the coefficients of the approximation function(s) for each reference sample of the set of reliable reference samples in a memory to which the computer for calculation of the actual spectrum has access;

2. A process for establishing the comparability of spectrometer measurements as in Claim 1, which is **characterized by** the fact that the determination of the quality of the approximation function for the comparison spectrum of any reference sample of the set of reliable reference samples takes place by calculation of the standard deviation or the correlation coefficient.

3. A method for establishing the comparability of spectrometer measurements as in Claim 1 or 2, which is **characterized by** the fact that the determination of the quality of the approximation function for the spectrum of the unknown sample takes place by calculating the standard deviation or the correlation coefficient.

4. A method for establishing the comparability of spectrometer measurements as in one of the preceding claims, which is **characterized by** the fact that samples with diffuse degrees of reflection of 2%, 10%, 20%, 40%, 50%, 60%, 80% and 99% are used for the set of reliable reference samples.

## Revendications

1. Procédé pour établir la comparabilité de mesures au spectromètre, de préférence dans le domaine du proche infrarouge, en particulier pour des mesures en réflexion diffuse, avec plusieurs exemplaires d'appareils de mesure du même type, le procédé comprenant les étapes suivantes :

   (a) enregistrement (1) de spectres de consigne, mesurés dans un spectromètre de référence étalonné, d'un jeu d'échantillons de référence fiabilisés dans une mémoire d'un exemplaire d'appareil de mesure d'un même type de spectromètres pour lesquels la comparabilité des mesures au spectromètre doit être établie ;
   (b) mesure du jeu d'échantillons de référence fiabilisés avec l'exemplaire d'appareil de mesure de l'étape (a), au moins trois spectres de chaque échantillon de référence étant de préférence déterminés pour un spectre de comparaison, et enregistrement (2) des spectres de comparaison du jeu d'échantillons de référence fiabilisés ;
   (c) mesure du spectre d'un échantillon inconnu avec l'exemplaire d'appareil de mesure de l'étape (a) et enregistrement (5) de ce spectre ;
(d) calcul (6) d'un spectre réel à partir du spectre de l'échantillon inconnu avec un logiciel par une unité de calcul en utilisant une équation qui résulte d'une fonction d'approximation ;
(e) enregistrement (7) du spectre réel ;
(f) édition (8) du spectre réel ;

    *caractérisé en ce que* le procédé d'établissement de la comparabilité de mesures au spectromètre comprend, après l'étape (b) et avant l'étape (c), les étapes suivantes :

    (i) calcul (3) du coefficient d'une fonction d'approximation d'au moins du deuxième ordre ou d'ordre supérieur pour chaque échantillon de référence du jeu d'échantillons de référence fiabilisés par une unité de calcul, qui a accès aux spectres de consigne enregistrés et aux spectres de comparaison enregistrés du jeu d'échantillons de référence fiabilisés,
    (ii) enregistrement (4) des coefficients des fonctions d'approximation pour chaque échantillon de référence du jeu d'échantillons de référence fiabilisés dans une mémoire à laquelle l'unité de calcul peut accéder pour calculer le spectre réel.

2. Procédé pour établir la comparabilité de mesures au spectromètre selon la revendication 1, *caractérisé en ce que* la détermination de la qualité de la fonction d'approximation pour le spectre de comparaison de chaque échantillon de référence du jeu d'échantillons de référence fiabilisés s'effectue en calculant l'écart type ou le coefficient de corrélation.

3. Procédé pour établir la comparabilité de mesures au spectromètre selon la revendication 1 ou 2, *caractérisé en ce que* la détermination de la qualité de la fonction d'approximation pour le spectre de l'échantillon inconnu s'effectue en calculant l'écart type ou le coefficient de corrélation.

4. Procédé pour établir la comparabilité de mesures au spectromètre selon l'une quelconque des revendications précédentes, *caractérisé en ce que*, pour le jeu d'échantillons de référence fiabilisés, on utilise des échantillons présentant des degrés de réflexion diffuse de 2 %, 10 %, 20 %, 40 %, 50 %, 60 %, 80 % et 99 %.

Fig. 1

EP 0 812 415 B1